# EUROPEAN PATENT APPLICATION

(11) **EP 4 546 167 A1**
(43) Date of publication of application: **30.04.2025**
(21) Application number: 23826039.2
(22) Date of filing: 19.05.2023
(51) Int. Cl.: G06F 16/953, G06F 16/9538, H04L 67/12, G07C 5/00

(54) **DATA PROCESSING METHOD AND APPARATUS**

(30) Priority: 21.06.2022 CN 202210705073
(71) Applicant: Alipay (Hangzhou) Information Technology Co., Ltd., Hangzhou, Zhejiang 310000 (CN)
(72) Inventor: CHEN, Tangqi, Hangzhou, Zhejiang 310000 (CN); CHEN, Ge, Hangzhou, Zhejiang 310000 (CN); SHEN, Lingnan, Hangzhou, Zhejiang 310000 (CN); LUO, Jilin, Hangzhou, Zhejiang 310000 (CN); ZHANG, Wen, Hangzhou, Zhejiang 310000 (CN)
(74) Representative: Winter, Brandl - Partnerschaft mbB
(86) International application number: PCT/CN2023/095191
(87) International publication number: WO 2023/246390

(57) **Abstract**

Embodiments of this specification provide a data processing method and apparatus. The data processing method includes: detecting an interface element of a vehicle service of an application, where the interface element is configured in a user interface of a terminal device on which the application runs; uploading a data updating request to a service platform of the vehicle service if it is detected that a data updating condition of the interface element is triggered; receiving vehicle use information that is of a user vehicle associated with the vehicle service and that is delivered by the service platform, where the vehicle use information is obtained by the service platform by querying a target vehicle platform corresponding to the user vehicle in a plurality of vehicle platforms; and performing, based on the vehicle use information, data updating on the interface element displayed in the user interface.

## Description

### TECHNICAL FIELD

This document relates to the field of data processing technologies, and in particular, to a data processing method and apparatus.

### BACKGROUND

With continuous development of the Internet and information technology, and popularity of mobile terminals, online services based on mobile terminals have become main channels through which users participate in services. With continuous improvement of the Internet, more users use the mobile terminals to manage information about the users. Because the users have different information providers, the users need to obtain and manage information by using the different providers in a process of managing the information about the users. With continuous economic development, more users become car owners. Therefore, how the user efficiently perceives and manages vehicle data becomes a concern for users who buy vehicles.

### SUMMARY

One or more embodiments of this specification provide a data processing method. The data processing method is applied to a detection component of an application, and includes: detecting an interface element of a vehicle service of the application, where the interface element is configured in a user interface of a terminal device on which the application runs; uploading a data updating request to a service platform of the vehicle service if it is detected that a data updating condition of the interface element is triggered; receiving vehicle use information that is of a user vehicle associated with the vehicle service and that is delivered by the service platform, where the vehicle use information is obtained by the service platform by querying a target vehicle platform corresponding to the user vehicle in a plurality of vehicle platforms; and performing, based on the vehicle use information, data updating on the interface element displayed in the user interface.

One or more embodiments of this specification provide another data processing method, applied to a service platform of a vehicle service, including: obtaining a data updating request uploaded by a detection component of an application after the detection component detects that a data updating condition of an interface element of the vehicle service is triggered, where the interface element is configured in a user interface of a terminal device on which the application runs; querying, based on a user identifier that is of a login user of the application and that is carried in the data updating request, a user vehicle associated with the vehicle service; determining a target vehicle platform corresponding to the user vehicle in a plurality of vehicle platforms, and sending an information query request of the user vehicle to the target vehicle platform; and receiving vehicle use information that is of the user vehicle and that is returned by the target vehicle platform, and delivering the vehicle use information to the detection component, wherein the detection component performs, based on the vehicle use information, data updating on the interface element displayed in the user interface.

One or more embodiments of this specification provide a data processing apparatus, run in a detection component of an application, and including: a detection module, configured to detect an interface element of a vehicle service of the application, where the interface element is configured in a user interface of a terminal device on which the application runs; a request uploading module, configured to run if it is detected that a data updating condition of the interface element is triggered, where the request uploading module is configured to upload a data updating request to a service platform of the vehicle service; an information receiving module, configured to receive vehicle use information that is of a user vehicle associated with the vehicle service and that is delivered by the service platform, where the vehicle use information is obtained by the service platform by querying a target vehicle platform corresponding to the user vehicle in a plurality of vehicle platforms; and a data updating module, configured to perform, based on the vehicle use information, data updating on the interface element displayed in the user interface.

One or more embodiments of this specification provide another data processing apparatus, run on a service platform of a vehicle service, and including: a request obtaining module, configured to obtain a data updating request uploaded by a detection component of an application after the detection component detects that a data updating condition of an interface element of the vehicle service is triggered, where the interface element is configured in a user interface of a terminal device on which the application runs; a vehicle query module, configured to query, based on a user identifier that is of a login user of the application and that is carried in the data updating request, a user vehicle associated with the vehicle service; an information query module, configured to: determine a target vehicle platform corresponding to the user vehicle in a plurality of vehicle platforms, and send an information query request of the user vehicle to the target vehicle platform; and an information receiving module, configured to: receive vehicle use information that is of the user vehicle and that is returned by the target vehicle platform, and deliver the vehicle use information to the detection component, wherein the detection component performs, based on the vehicle use information, data updating on the interface element displayed in the user interface.

One or more embodiments of this specification provide a data processing device, including: a processor; and a storage, configured to store computer-executable instructions. When the computer-executable instructions are executed, the processor is enabled to: detect an interface element of a vehicle service of an application, where the interface element is configured in a user interface of a terminal device on which the application runs; upload a data updating request to a service platform of the vehicle service if it is detected that a data updating condition of the interface element is triggered; receive vehicle use information that is of a user vehicle associated with the vehicle service and that is delivered by the service platform, where the vehicle use information is obtained by the service platform by querying a target vehicle platform corresponding to the user vehicle in a plurality of vehicle platforms; and perform, based on the vehicle use information, data updating on the interface element displayed in the user interface.

One or more embodiments of this specification provide another data processing device, including: a processor; and a storage, configured to store computer-executable instructions. When the computer-executable instruction are executed, the processor is enabled to: obtain a data updating request uploaded by a detection component of an application after the detection component detects that a data updating condition of an interface element of a vehicle service is triggered, where the interface element is configured in a user interface of a terminal device on which the application runs; query, based on a user identifier that is of a login user of the application and that is carried in the data updating request, a user vehicle associated with the vehicle service; determine a target vehicle platform corresponding to the user vehicle in a plurality of vehicle platforms, and send an information query request of the user vehicle to the target vehicle platform; and receive vehicle use information that is of the user vehicle and that is returned by the target vehicle platform, and deliver the vehicle use information to the detection component, wherein the detection component performs, based on the vehicle use information, data updating on the interface element displayed in the user interface.

One or more embodiments of this specification provide a storage medium, configured to store computer-executable instructions. When the computer-executable instructions are executed by a processor, the following procedure is implemented: detecting an interface element of a vehicle service of an application, where the interface element is configured in a user interface of a terminal device on which the application runs; uploading a data updating request to a service platform of the vehicle service if it is detected that a data updating condition of the interface element is triggered; receiving vehicle use information that is of a user vehicle associated with the vehicle service and that is delivered by the service platform, where the vehicle use information is obtained by the service platform by querying a target vehicle platform corresponding to the user vehicle in a plurality of vehicle platforms; and performing, based on the vehicle use information, data updating on the interface element displayed in the user interface.

One or more embodiments of this specification provide another storage medium, configured to store computer-executable instructions. When the computer-executable instructions are executed, the following procedure is implemented: obtaining a data updating request uploaded by a detection component of an application after the detection component detects that a data updating condition of an interface element of a vehicle service is triggered, where the interface element is configured in a user interface of a terminal device on which the application runs; querying, based on a user identifier that is of a login user of the application and that is carried in the data updating request, a user vehicle associated with the vehicle service; determining a target vehicle platform corresponding to the user vehicle in a plurality of vehicle platforms, and sending an information query request of the user vehicle to the target vehicle platform; and receiving vehicle use information that is of the user vehicle and that is returned by the target vehicle platform, and delivering the vehicle use information to the detection component, wherein the detection component performs, based on the vehicle use information, data updating on the interface element displayed in the user interface.

### BRIEF DESCRIPTION OF DRAWINGS

To describe the technical solutions in one or more embodiments of this specification or in the conventional technology more clearly, the following briefly describes the accompanying drawings needed for describing the embodiments or the conventional technology. Clearly, the accompanying drawings in the following description merely show some embodiments of this specification, and a person of ordinary skill in the art can still derive other drawings from these accompanying drawings without creative efforts.
FIG. 1 is a processing flowchart of a data processing method according to one or more embodiments of this specification;
FIG. 2 is a processing flowchart of a data processing method applied to an interface element scenario according to one or more embodiments of this specification;
FIG. 3 is a processing flowchart of another data processing method according to one or more embodiments of this specification;
FIG. 4 is a schematic diagram of a data processing apparatus according to one or more embodiments of this specification;
FIG. 5 is a schematic diagram of another data processing apparatus according to one or more embodiments of this specification;
FIG. 6 is a schematic structural diagram of a data processing device according to one or more embodiments of this specification; and
FIG. 7 is a schematic structural diagram of another data processing device according to one or more embodiments of this specification.

### DESCRIPTION OF EMBODIMENTS

To make a person skilled in the art understand the technical solutions in one or more embodiments of this specification better, the following clearly and comprehensively describes the technical solutions in the one or more embodiments of this specification with reference to the accompanying drawings in the one or more embodiments of this specification. Clearly, the described embodiments are merely some but not all of the embodiments of this specification. All other embodiments obtained by a person of ordinary skill in the art based on the one or more embodiments of this specification without creative efforts shall fall within the protection scope of this specification.

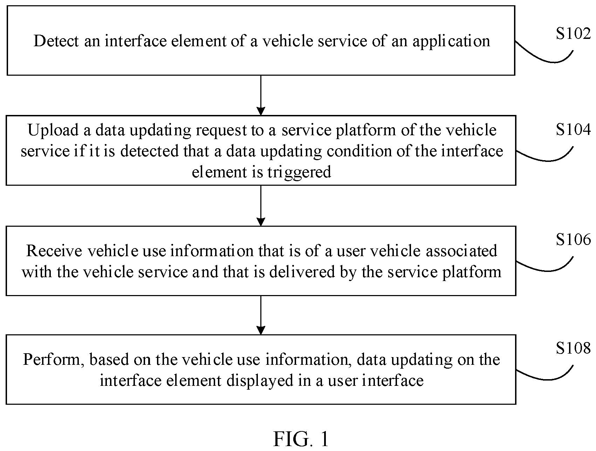

An embodiment of a data processing method provided in this specification: As shown in FIG. 1, the data processing method provided in this embodiment is applied to a detection component of an application, and specifically includes step S 102 to step S 108.

Step S102: Detect an interface element of a vehicle service of the application.

In the data processing method provided in this embodiment, the detection component of the application detects an interface element that is of the vehicle service of the application and that is configured in a user interface of a terminal device. When it is detected that a data updating condition of the interface element is triggered, a data updating request is uploaded to the vehicle service. After vehicle use information that is of a user vehicle and that is delivered by a service platform is received, data updating is performed, based on the vehicle use information, on the interface element displayed in the user interface. In this way, a user can query, in the interface element of the user interface by using the vehicle service of the application, vehicle use information of a user vehicle associated with the vehicle service, and the service platform of the vehicle service queries the vehicle use information of the user vehicle on a target vehicle platform corresponding to the user vehicle in a plurality of vehicle platforms based on a data updating request. In this way, the service platform performs data interconnection with the plurality of vehicle platforms, to improve a perception degree of the user for the vehicle use information. The user does not need to install vehicle providing services corresponding to a plurality of vehicles to affect use experience of the user for the terminal device.

The application includes an independent application installed on the terminal device, and the user can log in to the application to participate in a service provided by the application. The vehicle service includes a sub-service provided by the application, and is provided in the application. In addition, the vehicle service can be further a service provided by a third-party platform, is provided in the application to perform service providing, and is equivalent to a mini program. The vehicle service further includes a service independently run on the terminal device. This is not limited in this embodiment. In this embodiment, the vehicle service of the application is only used as an example for description. Another case is similar to a processing process of the vehicle service of the application. This is not limited here in this embodiment.

The interface element includes a component that intuitively displays service content on a home screen of the terminal device in an operating system of the terminal device. The user can interact with the interface element, so that a corresponding service performs a corresponding operation or the user can visualize underlying information by using the interface element, for example, a widget. A common form of the interface element is a small block or an icon. For example, in a home screen area, various small blocks and icons can be laid out, and wait to be selected by the user, or information is displayed to the user. A user element can be moved around, relocated, deleted, changed in size, etc. The user is allowed to change or organize displayed content. In addition, the interface element further includes an information display area suspended on a screen lock page of the terminal device.

The interface element is configured in the user interface of the terminal device on which the application runs. The user interface includes the home screen area of the terminal device or the lock screen page of the terminal device. The terminal device includes an electronic device with a touchscreen, for example, a user terminal, a tablet computer, a personal digital assistant (PAD for short), and an in-vehicle infotainment terminal.

In specific implementations, before configuring the interface element of the vehicle service, a login user who logs in to the application needs to activate the interface element of the vehicle service. The vehicle service can activate the interface element of the vehicle service for the login user of the application in the following manner: verifying, based on vehicle identification information that is of the user vehicle and that is entered by the login user, whether the user vehicle satisfies a configuration condition for the interface element; displaying an activation control of the interface element to the login user if yes; or activating the vehicle service of the user vehicle if no; and activating the interface element for the login user if it is detected that the activation control is triggered.

Specifically, after obtaining the vehicle identification information that is of the user vehicle and that is entered by the login user after accessing the vehicle service of the application, the vehicle service verifies the configuration condition for the interface element for the user vehicle based on the vehicle identification information. Specifically, in a process of verifying the configuration condition, whether the user vehicle satisfies the configuration condition for the interface element is verified. The configuration condition includes: a vehicle platform corresponding to the user vehicle is a platform for performing data interconnection with the service platform. The vehicle identification information includes a vehicle identifier and/or a vehicle delivery identifier of the user vehicle. The vehicle delivery identifier is, for example, a vehicle identification number (vin) of the vehicle.

In a process of verifying whether the user satisfies the configuration condition for the interface element, the following operations are included: determining the target vehicle platform corresponding to the user vehicle based on the vehicle identification information; querying, in a preset list, whether a platform identifier of the target vehicle platform exists; and if yes, determining that the user vehicle satisfies the configuration condition, that is, a verification result of verifying the configuration condition for the interface element for the user vehicle is that verification succeeds; or if no, determining that the user vehicle does not satisfy the configuration condition. The preset list records a platform identifier of a vehicle platform that establishes a data interconnection relationship with the service platform.

If it is verified that the user vehicle satisfies the configuration condition for the interface element, the activation control of the interface element is displayed to the login user. When it is detected that the activation control is triggered, the interface element is activated for the login user or the user vehicle. To further ensure that the login user is an owner of the user vehicle, and prevent the login user from displaying, by using the interface element, vehicle use information that does not belong to the login user, which affects data security of a real owner of the vehicle. In an optional implementation, in a process of activating the interface element for the login user, the vehicle service further performs the following operation: loading a service page of the vehicle providing service. If the target vehicle platform detects the information authorization instruction submitted by the service providing service, the target vehicle platform generates, based on the information authorization instruction, an information read request that carries a user identifier of the login user, and sends the information read request to the service platform. The information authorization instruction is submitted by the vehicle providing service after the vehicle providing service detects that an information authorization control configured on the service page is triggered.

Specifically, after it is verified that the user vehicle satisfies the configuration condition for the interface element, the vehicle service displays the activation control of the interface element to the login user. If it is detected that the activation control is triggered, to enable the login user to authorize the target vehicle platform corresponding to the user vehicle to verify the login user and the user vehicle, a service interface of the vehicle providing service corresponding to the target vehicle platform is invoked, and the service page of the vehicle providing service is loaded. The service page is configured with the information authorization control. If the vehicle providing service detects that the information authorization control is triggered, the vehicle providing service uploads the information authorization instruction to the target vehicle platform. The target vehicle platform queries user information of the login user and the vehicle identification information from the service platform based on the information authorization instruction, and verifies the user vehicle based on the user information and the vehicle identification information. The target vehicle platform verifies the user vehicle based on the user information and the vehicle identification information, activates the interface element of the login user after verification succeeds, and sends an activation result to the service platform after the interface element is activated. It should be noted that, that the target vehicle platform activates the interface element of the user vehicle for the login user is only to activate configuration permission to the interface element of the user vehicle for the login user, and the login user can display the interface element in the user interface of the terminal device only by configuring the interface element.

To help activate the interface element for the login user, in an optional implementation, in a process of activating the interface element for the login user, the service platform performs the following operations: reading user information of the login user and the vehicle identification information based on an information read request that is sent by the target vehicle platform after the target vehicle platform detects an information authorization instruction submitted by a vehicle providing service for the login user; synchronizing the user information and the vehicle identification information to the target vehicle platform, so that the target vehicle platform performs user vehicle verification based on the user information and the vehicle identification information; and receiving an activation result that is of the interface element and that is returned by the target vehicle platform when verification succeeds, and displaying the activation result by using the vehicle service.

In an optional implementation, the target vehicle platform performs the following operations in a process of performing user vehicle verification: querying, based on the vehicle identification information, vehicle user information having an association relationship with the vehicle identification information; verifying whether the vehicle user information matches the user information; and if yes, determining that a verification result of the user vehicle verification is that verification succeeds; or if no, determining that a verification result of the user vehicle verification is that verification fails.

Specifically, the target vehicle platform obtains the information authorization instruction submitted by the vehicle providing service; generates, based on the user identifier carried in the information authorization instruction, the information read request that carries the user identifier; and sends the information read request to the service platform. The service platform receives the information read request sent by the target vehicle platform; queries, based on the information read request, the user information of the login user and vehicle identification information of a user vehicle associated by the login user with the vehicle service; and synchronizes the user information and the vehicle identification information to the target vehicle platform. After receiving the user information and the vehicle identification information, the target vehicle platform first queries, based on the vehicle identification information, the vehicle user information having an association relationship with the vehicle identification information, that is, queries vehicle user information of a user who buys the user vehicle; verifies whether the queried vehicle user information matches the user information synchronized by the service platform; if yes, determines that a verification result of user vehicle verification is that verification succeeds, and activates the interface element of the user vehicle, that is, grants, to the login user, configuration permission for configuring, in the user interface, an interface element that displays the vehicle use information of the user vehicle; and after the configuration permission of the login user is granted, generates an activation result indicating that activation succeeds, and returns the activation result to the service platform. The service platform receives the activation result returned by the target vehicle platform, and delivers the activation result to the vehicle service. The vehicle service displays the activation result. If the queried vehicle user information does not match the user information synchronized by the service platform, it is determined that verification fails, and a verification failure reminder is returned to the service platform, to display the verification failure reminder by using the vehicle service.

The verifying whether the vehicle user information matches the user information includes: verifying whether user identity information in the vehicle user information is consistent with identity information in the user information; and/or verifying whether a similarity between a user image in the vehicle user information and a user image in the user information is greater than a preset threshold; and if yes, determining that the vehicle user information matches the user information; or if no, determining that the vehicle user information does not match the user information.

It should be noted that the above-mentioned descriptions is merely provided for one vehicle. To be specific, that the user vehicle activates the vehicle service and the interface element is described. If the login user has a plurality of vehicles, the vehicle service and the interface element are activated in a manner similar to the above-mentioned manner. Details are not described here in this embodiment. It should be further noted that, in the above-mentioned activation process, the vehicle service verifies, based on the vehicle identification information that is of the user vehicle and that is entered by the login user, whether the user vehicle satisfies the configuration condition for the interface element, to avoid a case in which the service platform does not perform data interconnection with the target vehicle platform corresponding to the user vehicle, and consequently, the vehicle use information cannot be obtained even if the interface element is activated, causing poor use experience of the login user. If a vehicle platform corresponding to each vehicle establishes data interconnection with the service platform, the configuration condition does not need to be verified. After obtaining the vehicle identification information that is of the user vehicle and that is entered by the login user, the vehicle service displays the activation control of the interface element to the login user. If it is detected that the activation control is triggered, the interface element is activated for the login user.

The detection component detects the interface element of the application, that is, detects the interface element of the vehicle service of the application.

Step S104: Upload the data updating request to the service platform of the vehicle service if it is detected that the data updating condition of the interface element is triggered. The service platform includes a platform or a server corresponding to the vehicle service.

In an optional implementation, that the data updating condition is triggered is detected in the following manner: detecting whether a configuration request for the interface element exists, and if yes, determining that the data updating condition is triggered; or detecting whether an updating request for the interface element exists, and if yes, determining that the data updating condition is triggered; or detecting whether a data updating time of the interface element arrives, and if yes, determining that the data updating condition is triggered.

Specifically, step S104 can be further replaced with one or more of the following: uploading the data updating request to the service platform of the vehicle service if a configuration request of the login user for the interface element of the vehicle service is detected; or uploading the data updating request to the service platform of the vehicle service if an updating request of the login user for the interface element is detected; or uploading a data updating request to the service platform of the vehicle service if it is detected that the data updating time of the interface element arrives.

In this embodiment, in a process of uploading the data updating request to the service platform of the vehicle service, the user identifier of the login user of the application is read, and then the data updating request that carries the user identifier is generated and uploaded to the service platform.

Step S106: Receive the use information that is of the user vehicle associated with the vehicle service and that is delivered by the service platform.

The vehicle use information includes information corresponding to a vehicle use state of the user vehicle at a current time, for example, total mileage, endurance mileage, remaining fuel, a remaining battery charge level, and tire pressure. In addition, the vehicle use information can further include vehicle state information. The vehicle state information includes a current vehicle state of the user vehicle, for example, a state in which a vehicle door is not closed for a long period of time, or an abnormal driving state.

In specific implementations, the vehicle use information is obtained by the service platform by querying the target vehicle platform corresponding to the user vehicle in the plurality of vehicle platforms. In an optional implementation, the service platform queries the vehicle use information in the following manner: querying, based on the user identifier that is of the login user of the application and that is carried in the data updating request, the user vehicle associated with the vehicle service; determining the target vehicle platform corresponding to the user vehicle in the plurality of vehicle platforms, and generating an information query request based on a vehicle service identifier of the user vehicle, where the vehicle service identifier is generated after the target vehicle platform activates the interface element; and querying the vehicle use information from the target vehicle platform based on the information query request.

Specifically, after activating the interface element of the user vehicle, the target vehicle platform allocates a vehicle service identifier to the user vehicle to identify the user vehicle. The vehicle service identifier is carried in the activation result and sent to the service platform. Subsequently, when querying the vehicle use information and/or the vehicle state information of the user vehicle from the target vehicle platform, the service platform sends the query request to the target vehicle platform based on the vehicle service identifier. In this embodiment, the service platform obtains the data updating request, and first queries, based on the user identifier carried in the data updating request, the user vehicle associated by the login user with the vehicle service; and determines the target vehicle platform corresponding to the user vehicle in the plurality of vehicle platforms, generates the information query request based on the vehicle service identifier that is of the user vehicle and that is generated by the target vehicle platform, and sends the information query request to the target vehicle platform. The target vehicle platform queries the vehicle use information of the user vehicle based on the vehicle service identifier carried in the information query request, and returns the vehicle use information to the service platform.

It should be noted that the above-mentioned descriptions of the vehicle service identifier is merely an example. When the target vehicle platform does not manage the user vehicle based on the vehicle service identifier, the service platform generates the information query request based on the vehicle identification information of the user vehicle, and sends the information query request to the target vehicle platform. The target vehicle platform queries the vehicle use information of the user vehicle based on the vehicle identification information carried in the information query request, and returns the vehicle use information to the service platform.

It should be further noted that, an example in which the login user associates one user vehicle with the vehicle service is merely used for description. If the login user associates at least two user vehicles with the vehicle service, and vehicle platforms corresponding to all user vehicles are different, interaction is performed with the login user to determine a default user vehicle. After receiving the data updating request, the service platform queries, based on the user identifier carried in the data updating request, the default user vehicle associated by the login user with the vehicle service; determines a default target vehicle platform corresponding to the default user vehicle in the plurality of vehicle platforms; and generates the information query request based on the vehicle service identifier of the default user vehicle, and sends the information query request to the default target vehicle platform. In addition, when interface elements of all the user vehicles are activated on the vehicle platforms corresponding to all the user vehicles, after receiving the data updating request, the service platform queries, based on the user identifier carried in the data updating request, at least two user vehicles associated by the login user with the vehicle service; and determines a vehicle platform corresponding to each of the at least two user vehicles in the plurality of vehicle platforms, and sends an information query request of each corresponding user vehicle to each vehicle platform. For a generation manner of the information query request, references can be made to the above-mentioned manner. This is not limited here in this embodiment.

Step S108: Perform, based on the vehicle use information, data updating on the interface element displayed in the user interface.

Specifically, after the vehicle use information and/or the vehicle state information delivered by the service platform are/is received, the received vehicle use information and/or the received vehicle state information are/is displayed based on the interface element, to complete data updating of the interface element.

In this embodiment, in addition to the provided case in which the detection component uploads the data updating request to the service platform, and the service platform queries the vehicle use information of the user vehicle based on the data updating request from the target vehicle platform corresponding to the user vehicle, the target service platform sends vehicle abnormality information to the service platform after detecting an abnormal state of the user vehicle. After receiving the vehicle abnormality information, the service platform delivers the vehicle abnormality information to the detection component. In this way, a perception degree of the login user for the vehicle abnormality information is improved. In an optional implementation, the detection component further performs the following operations: receiving the vehicle abnormality information delivered by the service platform, where the vehicle abnormality information is sent to the service platform after the target vehicle platform detects the abnormal state of the user vehicle; and performing, based on the vehicle abnormality information, a data reminder on the interface element displayed in the user interface.

Specifically, the target vehicle platform determines a vehicle state of the user vehicle based on the collected vehicle use information of the user vehicle; and when it is detected that the vehicle state of the user vehicle is an abnormal state, sends the vehicle abnormality information to the service platform based on the abnormal state. After receiving the vehicle abnormality information sent by the target vehicle platform, the service platform delivers the vehicle abnormality information to the detection component. The detection component receives the vehicle abnormality information delivered by the service platform, and performs, based on the vehicle abnormality information, the data reminder on the interface element displayed in the user interface.

When the login user associates two user vehicles with the vehicle service and displays vehicle use information of the two user vehicles by using the interface element, in a first optional implementation provided in this embodiment, data switching of the interface element is performed in the following manner: uploading a data switching request to the service platform if a switching instruction of the login user for the vehicle use information that is of the user vehicle and that is displayed on the interface element is detected; receiving second vehicle use information that is of a second user vehicle associated with the vehicle service and that is delivered by the service platform based on the data switching request, where the vehicle use information is obtained by the service platform by querying a second vehicle platform corresponding to the second user vehicle in the plurality of vehicle platforms; and performing, based on the second vehicle use information, data switching on the interface element displayed in the user interface.

When it is detected that the login user submits the switching instruction by using the interface element, the vehicle use information of the second user vehicle is queried, and data switching is performed on the interface element based on a query result. The data switching request is uploaded to the service platform in a process of performing data switching on the interface element. After receiving the data switching request, the service platform queries the second user vehicle associated by the login user with the vehicle service. The second user vehicle is a user vehicle other than a user vehicle associated by the login user with the vehicle service. After finding the second user vehicle, the service platform determines the second vehicle platform corresponding to the second user vehicle in the plurality of vehicle platforms, and sends an information query request for querying the vehicle use information of the second user vehicle to the second vehicle platform. The second vehicle platform queries the second vehicle use information of the second user vehicle, and returns the second vehicle use information to the service platform. After receiving the second vehicle use information of the second vehicle, the service platform delivers the second vehicle use information to the detection component. The detection component receives the second vehicle use information, and displays the second vehicle use information by using the interface element.

In the provided implementation, the second vehicle use information of the second user vehicle is queried based on the switching instruction of the login user, and data switching is performed on the interface element based on the query result. In a second optional implementation provided in this embodiment, the vehicle use information of the second user vehicle can be further displayed in the following manner: uploading the data updating request to the service platform if it is detected that the data updating time of the interface element arrives, so that the service platform queries, based on the data updating request, first vehicle use information and second vehicle use information of the user vehicle and the second user vehicle for which the interface element is activated; receiving the first vehicle use information of the user vehicle and the second vehicle use information of the second user vehicle that are delivered by the service platform; displaying the first vehicle use information on the interface element; and displaying the second vehicle use information on the interface element if a switching instruction for the interface element is detected.

When it is detected that the data updating time of the interface element of the user vehicle arrives, the data updating request can be further uploaded to the service platform. After finding the user vehicle and the second user vehicle, the service platform queries the vehicle use information of the user vehicle from the target vehicle platform corresponding to the user vehicle in the plurality of vehicle platforms, and queries the second vehicle use information of the second user vehicle from the second vehicle platform corresponding to the second user vehicle in the plurality of vehicle platforms; and delivers the found vehicle use information and the found second vehicle use information to the detection component. The detection component first displays the vehicle use information of the user vehicle; and displays the second vehicle use information on the interface element if the switching instruction of the login user for the interface element is detected.

It should be noted that, the interface element displays the vehicle use information of the user vehicle by default. If vehicle abnormality information that is of the second user vehicle and that is delivered by the service platform is received, switching to the vehicle use information of the second user vehicle is performed, and the vehicle abnormality information of the second user vehicle is displayed.

Switching of the interface element between two user vehicles is merely used as an example for description. If the login user associates at least two user vehicles with the vehicle service, data displayed on the interface element is switched in a manner similar to the above-mentioned switching manner. Details are omitted here for simplicity in this embodiment.

In specific implementations, in addition to activating configuration permission to the interface element of the user vehicle, the login user activates the vehicle service. When the interface element is configured, the login user can further submit a service request for the vehicle service based on the interface element. In an optional implementation, the detection component further performs the following operations: obtaining a vehicle service request submitted by the login user by using the interface element; and uploading the vehicle service request to the service platform, to perform vehicle service processing of the user vehicle on the service platform.

Specifically, the login user submits the vehicle service request by using the interface element, and the detection component uploads the vehicle service request to the service platform to perform vehicle service processing of the user vehicle on the service platform.

It should be further noted that related service content of the vehicle service can be combined with related content provided by the application. For example, the service platform obtains a vehicle parking service request submitted by the login user; and performs parking processing based on the vehicle parking service request, and determines, based on parking duration, to issue a carbon reduction identifier to the login user.

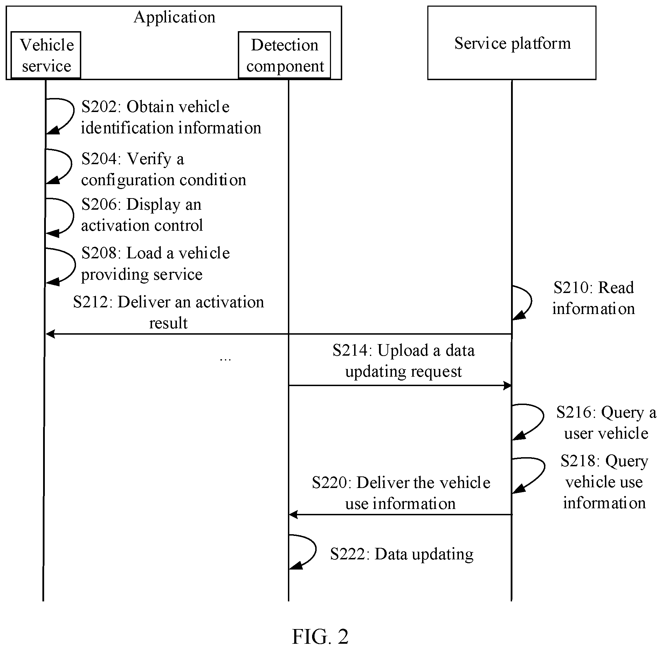

The following further describes the data processing method provided in the embodiments by using an example in which the data processing method provided in the embodiments is applied to an interface element scenario. As shown in FIG. 2, the data processing method applied to the interface element scenario specifically includes the following steps.

Step S202: A vehicle service of an application obtains vehicle identification information that is of a user vehicle and that is entered by a login user.

Step S204: Verify whether the user vehicle satisfies a configuration condition for an interface element; and perform step S206 and step S208 if yes; or display an activation result of the vehicle service to the login user if no.

Step S206: Display an activation control of the interface element to the login user.

Step S208: Load a service page of a vehicle providing service corresponding to the user vehicle if it is detected that the activation control is triggered.

When the vehicle providing service detects that an information authorization component configured on the service page is triggered, an information authorization instruction is uploaded to a target vehicle platform corresponding to the user vehicle. The target vehicle platform generates an information read request based on a user identifier that is of the login user and that is carried in the information authorization instruction, and sends the information read request to a service platform.

The service platform reads user information of the login user and vehicle identification information of the user vehicle based on the information read request, and sends the user information and the vehicle identification information to the target vehicle platform.

After receiving the vehicle identification information and the user information, the target vehicle platform performs user vehicle verification based on the vehicle identification information and the user information, and when verification succeeds, activates display permission of the login user to display the vehicle use information of the user vehicle on the interface element configured in a user interface; and sends an activation result to the service platform after the display permission is activated.

The service platform sends, to the vehicle service, the activation result sent by the service platform, to display the activation result on the service page of the vehicle service.

Step S214: If a detection module of the application detects a configuration request of the login user for the interface element of the vehicle service, upload, to the service platform, a data updating request that carries a user identifier of the login user.

The service platform queries the user vehicle of the login user based on the user identifier carried in the data updating request, determines the target vehicle platform corresponding to the user vehicle in a plurality of vehicle platforms, and sends, to the target vehicle platform, an information query request that carries a vehicle service identifier of the user vehicle.

The vehicle service identifier is generated by the target vehicle platform after the display permission to display the vehicle use information of the user vehicle on the interface element of the vehicle service is activated and sent to the service platform.

The service platform receives the vehicle use information that is of the user vehicle and that is returned by the target vehicle platform, and delivers the vehicle use information to a detection component.

Step S222: The detection component performs data updating on the interface element based on the vehicle use information.

Another embodiment of the data processing method provided in this specification: The data processing method provided in this embodiment is performed by the service platform of the vehicle service. The embodiment of the data processing method provided in this specification is performed by the detection component of the application. The data processing method applied to the service platform of the vehicle service provided in this embodiment matches the data processing method applied to the detection component of the application provided in the method embodiment in an execution process. Therefore, for reading this embodiment, references can be made to corresponding content of the above-mentioned method embodiment.

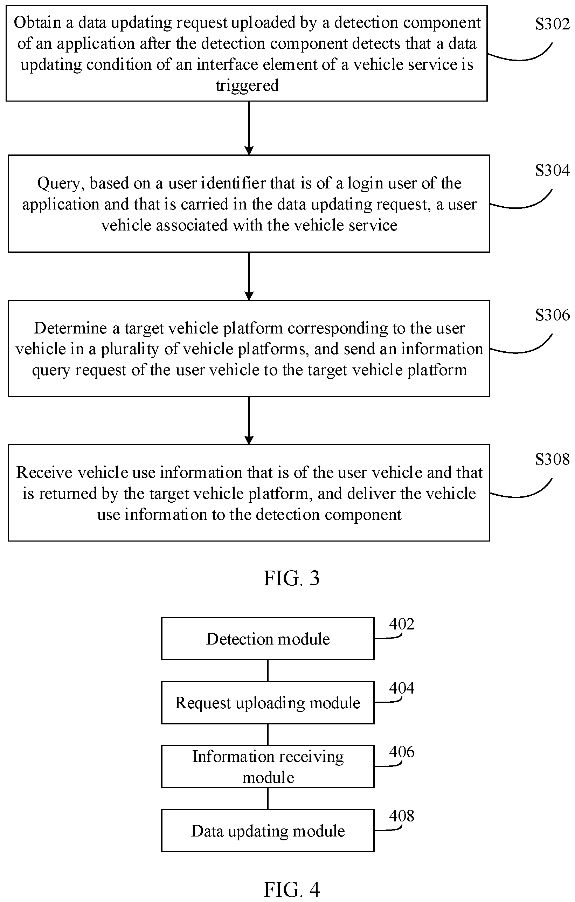

As shown in FIG. 3, the data processing method provided in this embodiment is applied to a service platform of a vehicle service, and specifically includes step S302 to step S308.

Step S302: Obtain a data updating request uploaded by a detection component of an application after the detection component detects that a data updating condition of an interface element of the vehicle service is triggered.

In the data processing method provided in this embodiment, the detection component of the application detects an interface element that is of the vehicle service of the application and that is configured in a user interface of a terminal device. When it is detected that a data updating condition of the interface element is triggered, a data updating request is uploaded to the vehicle service. After vehicle use information that is of a user vehicle and that is delivered by a service platform is received, data updating is performed, based on the vehicle use information, on the interface element displayed in the user interface. In this way, a user can query, in the interface element of the user interface by using the vehicle service of the application, vehicle use information of a user vehicle associated with the vehicle service, and the service platform of the vehicle service queries the vehicle use information of the user vehicle on a target vehicle platform corresponding to the user vehicle in a plurality of vehicle platforms based on a data updating request. In this way, the service platform performs data interconnection with the plurality of vehicle platforms, to improve a perception degree of the user for the vehicle use information. The user does not need to install vehicle providing services corresponding to a plurality of vehicles to affect use experience of the user for the terminal device.

The application includes an independent application installed on the terminal device, and the user can log in to the application to participate in a service provided by the application. The vehicle service includes a sub-service provided by the application, and is provided in the application. In addition, the vehicle service can be further a service provided by a third-party platform, is provided in the application to perform service providing, and is equivalent to a mini program. The vehicle service further includes a service independently run on the terminal device. This is not limited in this embodiment. In this embodiment, the vehicle service of the application is only used as an example for description. Another case is similar to a processing process of the vehicle service of the application. This is not limited here in this embodiment.

The interface element includes a component that intuitively displays service content on a home screen of the terminal device in an operating system of the terminal device. The interface element is configured in the user interface of the terminal device on which the application runs. The user can interact with the interface element, so that a corresponding service performs a corresponding operation or the user can visualize underlying information by using the interface element, for example, a widget. A common form of the interface element is a small block or an icon. For example, in a home screen area, various small blocks and icons can be laid out, and wait to be selected by the user, or information is displayed to the user. A user element can be moved around, relocated, deleted, changed in size, etc. The user is allowed to change or organize displayed content. In addition, the interface element further includes an information display area suspended on a screen lock page of the terminal device.

The interface element is configured in the user interface of the terminal device on which the application runs. The user interface includes the home screen area of the terminal device or the lock screen page of the terminal device. The terminal device includes an electronic device with a touchscreen, for example, a user terminal, a tablet computer, a personal digital assistant (PAD for short), and an in-vehicle infotainment terminal.

In specific implementations, before configuring the interface element of the vehicle service, a login user who logs in to the application needs to activate the interface element of the vehicle service. In this embodiment, the vehicle service activates the interface element of the vehicle service for the login user of the application in the following manner: verifying, based on vehicle identification information that is of the user vehicle and that is entered by the login user, whether the user vehicle satisfies a configuration condition for the interface element; displaying an activation control of the interface element to the login user if yes; or activating the vehicle service of the user vehicle if no; and activating the interface element for the login user if it is detected that the activation control is triggered.

Specifically, after obtaining the vehicle identification information that is of the user vehicle and that is entered by the login user after accessing the vehicle service of the application, the vehicle service verifies the configuration condition for the interface element for the user vehicle based on the vehicle identification information. Specifically, in a process of verifying the configuration condition, whether the user vehicle satisfies the configuration condition for the interface element is verified. The configuration condition includes: a vehicle platform corresponding to the user vehicle is a platform for performing data interconnection with the service platform. The vehicle identification information includes a vehicle identifier and/or a vehicle delivery identifier of the user vehicle. The vehicle delivery identifier is, for example, a vehicle identification number (vin) of the vehicle.

In a process in which the vehicle service verifies whether the user satisfies the configuration condition for the interface element, the following operations are included: determining the target vehicle platform corresponding to the user vehicle based on the vehicle identification information; querying, in a preset list, whether a platform identifier of the target vehicle platform exists; and if yes, determining that the user vehicle satisfies the configuration condition, that is, a verification result of verifying the configuration condition for the interface element for the user vehicle is that verification succeeds; or if no, determining that the user vehicle does not satisfy the configuration condition. The preset list records a platform identifier of a vehicle platform that establishes a data interconnection relationship with the service platform.

If the vehicle service verifies that the user vehicle satisfies the configuration condition for the interface element, the vehicle service displays the activation control of the interface element to the login user, and when it is detected that the activation control is triggered, activates the interface element for the login user or the user vehicle. To further ensure that the login user is an owner of the user vehicle, and prevent the login user from displaying, by using the interface element, vehicle use information that does not belong to the login user, which affects data security of a real owner of the vehicle. In an optional implementation, in a process of activating the interface element for the login user, the vehicle service further performs the following operation: loading a service page of the vehicle providing service. If the target vehicle platform detects the information authorization instruction submitted by the service providing service, the target vehicle platform generates, based on the information authorization instruction, an information read request that carries a user identifier of the login user, and sends the information read request to the service platform. The information authorization instruction is submitted by the vehicle providing service after the vehicle providing service detects that an information authorization control configured on the service page is triggered.

Specifically, after it is verified that the user vehicle satisfies the configuration condition for the interface element, the vehicle service displays the activation control of the interface element to the login user. If it is detected that the activation control is triggered, to enable the login user to authorize the target vehicle platform corresponding to the user vehicle to verify the login user and the user vehicle, a service interface of the vehicle providing service corresponding to the target vehicle platform is invoked, and the service page of the vehicle providing service is loaded. The service page is configured with the information authorization control. If the vehicle providing service detects that the information authorization control is triggered, the vehicle providing service uploads the information authorization instruction to the target vehicle platform. The target vehicle platform queries user information of the login user and the vehicle identification information from the service platform based on the information authorization instruction, and verifies the user vehicle based on the user information and the vehicle identification information. The target vehicle platform verifies the user vehicle based on the user information and the vehicle identification information, activates the interface element of the login user after verification succeeds, and sends an activation result to the service platform after the interface element is activated. It should be noted that, that the target vehicle platform activates the interface element of the user vehicle for the login user is only to activate configuration permission to the interface element of the user vehicle for the login user, and the login user can display the interface element in the user interface of the terminal device only by configuring the interface element.

To cooperate to activate the interface element for the login user, in an optional implementation, in a process of activating the interface element for the login user, the service platform performs the following operations: reading user information and vehicle identification information of the login user based on an information read request sent by the target vehicle platform, where the target vehicle platform sends the information read request after detecting an information authorization instruction submitted by a vehicle providing service for the login user; synchronizing the user information and the vehicle identification information to the target vehicle platform, so that the target vehicle platform performs user vehicle verification based on the user information and the vehicle identification information; and receiving an activation result that is of the interface element and that is returned by the target vehicle platform when verification succeeds, and displaying the activation result by using the vehicle service.

In this embodiment, the target vehicle platform performs the following operations in a process of performing user vehicle verification: querying, based on the vehicle identification information, vehicle user information having an association relationship with the vehicle identification information; verifying whether the vehicle user information matches the user information; and if yes, determining that a verification result of the user vehicle verification is that verification succeeds; or if no, determining that a verification result of the user vehicle verification is that verification fails.

Specifically, the target vehicle platform obtains the information authorization instruction submitted by the vehicle providing service; generates, based on the user identifier carried in the information authorization instruction, the information read request that carries the user identifier; and sends the information read request to the service platform. The service platform receives the information read request sent by the target vehicle platform; queries, based on the information read request, the user information of the login user and vehicle identification information of a user vehicle associated by the login user with the vehicle service; and synchronizes the user information and the vehicle identification information to the target vehicle platform. After receiving the user information and the vehicle identification information, the target vehicle platform first queries, based on the vehicle identification information, the vehicle user information having an association relationship with the vehicle identification information, that is, queries vehicle user information of a user who buys the user vehicle; verifies whether the queried vehicle user information matches the user information synchronized by the service platform; if yes, determines that a verification result of user vehicle verification is that verification succeeds, and activates the interface element of the user vehicle, that is, grants, to the login user, configuration permission for configuring, in the user interface, an interface element that displays the vehicle use information of the user vehicle; and after the configuration permission of the login user is granted, generates an activation result indicating that activation succeeds, and returns the activation result to the service platform. The service platform receives the activation result returned by the target vehicle platform, and delivers the activation result to the vehicle service. The vehicle service displays the activation result. If the queried vehicle user information does not match the user information synchronized by the service platform, it is determined that verification fails, and a verification failure reminder is returned to the service platform, to display the verification failure reminder by using the vehicle service.

The verifying whether the vehicle user information matches the user information includes: verifying whether user identity information in the vehicle user information is consistent with identity information in the user information; and/or verifying whether a similarity between a user image in the vehicle user information and a user image in the user information is greater than a preset threshold; and if yes, determining that the vehicle user information matches the user information; or if no, determining that the vehicle user information does not match the user information.

It should be noted that the above-mentioned descriptions is merely provided for one vehicle. To be specific, that the user vehicle activates the vehicle service and the interface element is described. If the login user has a plurality of vehicles, the vehicle service and the interface element are activated in a manner similar to the above-mentioned manner. Details are not described here in this embodiment. It should be further noted that, in the above-mentioned activation process, the vehicle service verifies, based on the vehicle identification information that is of the user vehicle and that is entered by the login user, whether the user vehicle satisfies the configuration condition for the interface element, to avoid a case in which the service platform does not perform data interconnection with the target vehicle platform corresponding to the user vehicle, and consequently, the vehicle use information cannot be obtained even if the interface element is activated, causing poor use experience of the login user. If a vehicle platform corresponding to each vehicle establishes data interconnection with the service platform, the configuration condition does not need to be verified. After obtaining the vehicle identification information that is of the user vehicle and that is entered by the login user, the vehicle service displays the activation control of the interface element to the login user. If it is detected that the activation control is triggered, the interface element is activated for the login user.

The detection component detects the interface element of the application, that is, detects the interface element of the vehicle service of the application. A data updating request is uploaded to a service platform of the vehicle service if it is detected that a data updating condition of the interface element is triggered. The service platform includes a platform or a server corresponding to the vehicle service.

In this embodiment, that the data updating condition is triggered is detected by the detection component in the following manner: detecting whether a configuration request for the interface element exists, and if yes, determining that the data updating condition is triggered; or detecting whether an updating request for the interface element exists, and if yes, determining that the data updating condition is triggered; or detecting whether a data updating time of the interface element arrives, and if yes, determining that the data updating condition is triggered.

The service platform obtains the data updating request uploaded by the detection component of the application after the detection component detects that the data updating condition of the interface element of the vehicle service is triggered. In addition, in a process in which the detection component uploads the data updating request to the service platform of the vehicle service, the user identifier of the login user of the application is read, and then the data updating request that carries the user identifier is generated and uploaded to the service platform.

S304: Query, based on the user identifier that is of the login user of the application and that is carried in the data updating request, the user vehicle associated with the vehicle service.

The user vehicle includes a vehicle associated by the login user with the vehicle service.

In specific implementations, the user vehicle associated by the login user with the vehicle service is queried based on the user identifier. If at least two user vehicles are queried, a default user vehicle is determined based on interaction between the vehicle service and the login user. The querying the user vehicle associated with the vehicle service includes: querying the default user vehicle associated with the vehicle service.

Step S306: Determine a target vehicle platform corresponding to the user vehicle in a plurality of vehicle platforms, and send an information query request of the user vehicle to the target vehicle platform.

In an optional implementation, the information query request is generated in the following manner: generating the information query request of the user vehicle based on a vehicle service identifier that is included in an activation result of the interface element and that is returned by the target vehicle platform.

After activating the interface element of the user vehicle, the target vehicle platform allocates a vehicle service identifier to the user vehicle to identify the user vehicle. The vehicle service identifier is carried in the activation result and sent to the service platform. Subsequently, when querying the vehicle use information and/or the vehicle state information of the user vehicle from the target vehicle platform, the service platform sends the query request to the target vehicle platform based on the vehicle service identifier. In this embodiment, the service platform obtains the data updating request, and first queries, based on the user identifier carried in the data updating request, the user vehicle associated by the login user with the vehicle service; and determines the target vehicle platform corresponding to the user vehicle in the plurality of vehicle platforms, generates the information query request based on the vehicle service identifier that is of the user vehicle and that is generated by the target vehicle platform, and sends the information query request to the target vehicle platform. The target vehicle platform queries the vehicle use information of the user vehicle based on the vehicle service identifier carried in the information query request, and returns the vehicle use information to the service platform.

It should be noted that the above-mentioned descriptions of the vehicle service identifier is merely an example. When the target vehicle platform does not manage the user vehicle based on the vehicle service identifier, the service platform generates the information query request based on the vehicle identification information of the user vehicle, and sends the information query request to the target vehicle platform. The target vehicle platform queries the vehicle use information of the user vehicle based on the vehicle identification information carried in the information query request, and returns the vehicle use information to the service platform.

It should be further noted that, an example in which the login user associates one user vehicle with the vehicle service is merely used for description. If the login user associates at least two user vehicles with the vehicle service, and vehicle platforms corresponding to all user vehicles are different, interaction is performed with the login user to determine a default user vehicle. After receiving the data updating request, the service platform queries, based on the user identifier carried in the data updating request, the default user vehicle associated by the login user with the vehicle service; determines a default target vehicle platform corresponding to the default user vehicle in the plurality of vehicle platforms; and generates the information query request based on the vehicle service identifier of the default user vehicle, and sends the information query request to the default target vehicle platform. In addition, when interface elements of all the user vehicles are activated on the vehicle platforms corresponding to all the user vehicles, after receiving the data updating request, the service platform queries, based on the user identifier carried in the data updating request, at least two user vehicles associated by the login user with the vehicle service; and determines a vehicle platform corresponding to each of the at least two user vehicles in the plurality of vehicle platforms, and sends an information query request of each corresponding user vehicle to each vehicle platform. For a generation manner of the information query request, references can be made to the above-mentioned manner. This is not limited here in this embodiment.

Step S308: Receive vehicle use information that is of the user vehicle and that is returned by the target vehicle platform, and deliver the vehicle use information to the detection component.

The vehicle use information includes information corresponding to a vehicle use state of the user vehicle at a current time, for example, total mileage, endurance mileage, remaining fuel, a remaining battery charge level, and tire pressure. In addition, the vehicle use information can further include vehicle state information. The vehicle state information includes a current vehicle state of the user vehicle, for example, a state in which a vehicle door is not closed for a long period of time, or an abnormal driving state.

After receiving the vehicle use information, the detection component performs, based on the vehicle use information, data updating on the interface element displayed in the user interface.

In this embodiment, in addition to the provided case in which the detection component uploads the data updating request to the service platform, and the service platform queries the vehicle use information of the user vehicle based on the data updating request from the target vehicle platform corresponding to the user vehicle, the target service platform sends vehicle abnormality information to the service platform after detecting an abnormal state of the user vehicle. After receiving the vehicle abnormality information, the service platform delivers the vehicle abnormality information to the detection component. In this way, a perception degree of the login user for the vehicle abnormality information is improved. In this embodiment, the detection component further performs the following operations: receiving the vehicle abnormality information delivered by the service platform, where the vehicle abnormality information is sent to the service platform after the target vehicle platform detects the abnormal state of the user vehicle; and performing, based on the vehicle abnormality information, a data reminder on the interface element displayed in the user interface.

Correspondingly, in an optional implementation, the service platform further performs the following operations: receiving vehicle abnormality information that is sent by the target vehicle platform after the target vehicle platform detects an abnormal state of the user vehicle; and delivering the vehicle abnormality information to the interface element, so that the interface element performs, based on the vehicle abnormality information, data reminding on the interface element displayed in the user interface.

Specifically, the target vehicle platform determines a vehicle state of the user vehicle based on the collected vehicle use information of the user vehicle; and when it is detected that the vehicle state of the user vehicle is an abnormal state, sends the vehicle abnormality information to the service platform based on the abnormal state. After receiving the vehicle abnormality information sent by the target vehicle platform, the service platform delivers the vehicle abnormality information to the detection component. The detection component receives the vehicle abnormality information delivered by the service platform, and performs, based on the vehicle abnormality information, the data reminder on the interface element displayed in the user interface.

When the login user associates two user vehicles with the vehicle service and displays vehicle use information of the two user vehicles by using the interface element, in this embodiment, the detection component performs data switching of the interface element in the following manner: uploading a data switching request to the service platform if a switching instruction of the login user for the vehicle use information that is of the user vehicle and that is displayed on the interface element is detected; receiving second vehicle use information that is of a second user vehicle associated with the vehicle service and that is delivered by the service platform based on the data switching request, where the vehicle use information is obtained by the service platform by querying a second vehicle platform corresponding to the second user vehicle in the plurality of vehicle platforms; and performing, based on the second vehicle use information, data switching on the interface element displayed in the user interface.

In an optional implementation, in a data switching process, the service platform performs the following operations: querying, based on a data switching request that is displayed on the interface element for the vehicle use information of the user vehicle and that is uploaded by the detection component, a second user vehicle that is associated with the vehicle service and for which the interface element is activated; determining a second vehicle platform corresponding to the second user vehicle in the plurality of vehicle platforms, and querying second vehicle use information of the second user vehicle from the second vehicle platform; and receiving the second vehicle use information returned by the second vehicle platform, and delivering the second vehicle use information to the detection component, so that the detection component performs data switching on the interface element based on the second vehicle use information.

When it is detected that the login user submits the switching instruction by using the interface element, the vehicle use information of the second user vehicle is queried, and data switching is performed on the interface element based on a query result. The data switching request is uploaded to the service platform in a process of performing data switching on the interface element. After receiving the data switching request, the service platform queries the second user vehicle associated by the login user with the vehicle service. The second user vehicle is a user vehicle other than a user vehicle associated by the login user with the vehicle service. After finding the second user vehicle, the service platform determines the second vehicle platform corresponding to the second user vehicle in the plurality of vehicle platforms, and sends an information query request for querying the vehicle use information of the second user vehicle to the second vehicle platform. The second vehicle platform queries the second vehicle use information of the second user vehicle, and returns the second vehicle use information to the service platform. After receiving the second vehicle use information of the second vehicle, the service platform delivers the second vehicle use information to the detection component. The detection component receives the second vehicle use information, and displays the second vehicle use information by using the interface element.

In the provided implementation, the detection component queries the second vehicle use information of the second user vehicle based on the switching instruction of the login user, and performs data switching on the interface element based on the query result. The detection component can further display the vehicle use information of the second user vehicle in the following manner: The detection component uploads the data updating request to the service platform if the detection component detects that the data updating time of the interface element arrives, so that the service platform queries, based on the data updating request, first vehicle use information and second vehicle use information of the user vehicle and the second user vehicle for which the interface element is activated; receives the first vehicle use information of the user vehicle and the second vehicle use information of the second user vehicle that are delivered by the service platform; displays the first vehicle use information on the interface element; and displays the second vehicle use information on the interface element if a switching instruction for the interface element is detected.

When it is detected that the data updating time of the interface element of the user vehicle arrives, the data updating request can be further uploaded to the service platform. After finding the user vehicle and the second user vehicle, the service platform queries the vehicle use information of the user vehicle from the target vehicle platform corresponding to the user vehicle in the plurality of vehicle platforms, and queries the second vehicle use information of the second user vehicle from the second vehicle platform corresponding to the second user vehicle in the plurality of vehicle platforms; and delivers the found vehicle use information and the found second vehicle use information to the detection component. The detection component first displays the vehicle use information of the user vehicle; and displays the second vehicle use information on the interface element if the switching instruction of the login user for the interface element is detected.

It should be noted that, the interface element displays the vehicle use information of the user vehicle by default. If vehicle abnormality information that is of the second user vehicle and that is delivered by the service platform is received, switching to the vehicle use information of the second user vehicle is performed, and the vehicle abnormality information of the second user vehicle is displayed.

Switching of the interface element between two user vehicles is merely used as an example for description. If the login user associates at least two user vehicles with the vehicle service, data displayed on the interface element is switched in a manner similar to the above-mentioned switching manner. Details are omitted here for simplicity in this embodiment.

In specific implementations, in addition to activating configuration permission to the interface element of the user vehicle, the login user activates the vehicle service. When the interface element is configured, the login user can further submit a service request for the vehicle service based on the interface element. In this embodiment, the detection component further performs the following operations: obtaining a vehicle service request submitted by the login user by using the interface element; and uploading the vehicle service request to the service platform, to perform vehicle service processing of the user vehicle on the service platform.

Specifically, the login user submits the vehicle service request by using the interface element, and the detection component uploads the vehicle service request to the service platform to perform vehicle service processing of the user vehicle on the service platform.

It should be further noted that related service content of the vehicle service can be combined with related content provided by the application. For example, the service platform obtains a vehicle parking service request submitted by the login user; and performs parking processing based on the vehicle parking service request, and determines, based on parking duration, to issue a carbon reduction identifier to the login user.

The following further describes the data processing method provided in the embodiments by using an example in which the data processing method provided in the embodiments is applied to an interface element scenario. As shown in FIG. 2, the data processing method applied to the interface element scenario specifically includes the following steps.

A vehicle service of an application obtains vehicle identification information that is of a user vehicle and that is entered by a login user; verifies whether the user vehicle satisfies a configuration condition for an interface element; displays an activation control of the interface element to the login user if yes; and if it is detected that the activation control is triggered, loads a service page that is of a vehicle providing service and that corresponds to the user vehicle. When the vehicle providing service detects that an information authorization component configured on the service page is triggered, the vehicle providing service uploads an information authorization instruction to a target vehicle platform corresponding to the user vehicle. The target vehicle platform generates an information read request based on a user identifier that is of the login user and that is carried in the information authorization instruction, and sends the information read request to a service platform.

Step S210: Read user information of the login user and vehicle identification information of the user vehicle based on the information read request, and send the user information and the vehicle identification information to the target vehicle platform.

After receiving the vehicle identification information and the user information, the target vehicle platform performs user vehicle verification based on the vehicle identification information and the user information, and when verification succeeds, activates display permission of the login user to display the vehicle use information of the user vehicle on the interface element configured in a user interface; and sends an activation result to the service platform after the display permission is activated.

Step S212: Sends, to the vehicle service, the activation result sent by the service platform, to display the activation result on the service page of the vehicle service.

If a detection module of the application detects a configuration request of the login user for the interface element of the vehicle service, upload, to the service platform, a data updating request that carries a user identifier of the login user.

Step S216: Query a user vehicle of the login user based on the user identifier carried in the data updating request.

Step S218: Determine the target vehicle platform corresponding to the user vehicle in the plurality of vehicle platforms, and send, to the target vehicle platform, an information query request that carries a vehicle service identifier of the user vehicle.

The vehicle service identifier is generated by the target vehicle platform after the display permission to display the vehicle use information of the user vehicle on the interface element of the vehicle service is activated and sent to the service platform.

Step S220: Receive the vehicle use information that is of the user vehicle and that is returned by the target vehicle platform, and deliver the vehicle use information to the detection component.

The detection component performs data updating on the interface element based on the vehicle use information.

An embodiment of a data processing apparatus provided in this specification is as follows: The data processing method applied to the detection component of the application is provided in the above-mentioned embodiments, and correspondingly, a data processing apparatus that is run on the detection component of the application is further provided. The following provides descriptions with reference to the accompanying drawings.

FIG. 4 is a schematic diagram of a data processing apparatus according to an embodiment.

The apparatus embodiment corresponds to the method embodiment, and therefore is described briefly. For related parts, references can be made to the corresponding description of the method embodiment provided above. The apparatus embodiment described below is merely an example.

This embodiment provides a data processing apparatus, run on a detection component of an application, and including: a detection module 402, configured to detect an interface element of a vehicle service of the application, where the interface element is configured in a user interface of a terminal device on which the application runs; a request uploading module 404, configured to run if it is detected that a data updating condition of the interface element is triggered, where the request uploading module 404 is configured to upload a data updating request to a service platform of the vehicle service; an information receiving module 406, configured to receive vehicle use information that is of a user vehicle associated with the vehicle service and that is delivered by the service platform, where the vehicle use information is obtained by the service platform by querying a target vehicle platform corresponding to the user vehicle in a plurality of vehicle platforms; and a data updating module 408, configured to perform, based on the vehicle use information, data updating on the interface element displayed in the user interface.

Another embodiment of a data processing apparatus provided in this specification is as follows: The data processing method applied to the service platform of the vehicle service is provided in the above-mentioned embodiments, and correspondingly, a data processing apparatus that is run on the service platform of the vehicle service is further provided. The following provides descriptions with reference to the accompanying drawings.

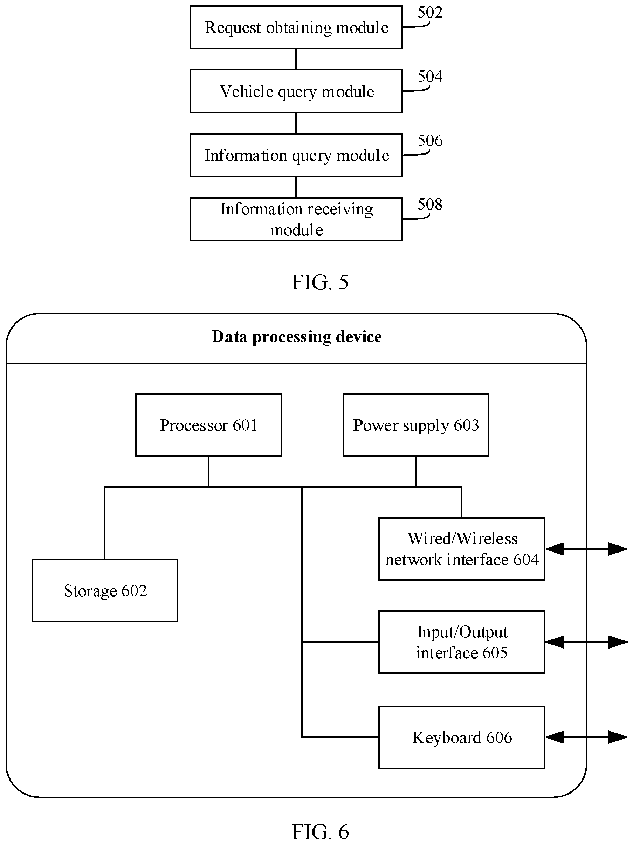

FIG. 5 is a schematic diagram of a data processing apparatus according to an embodiment.

The apparatus embodiment corresponds to the method embodiment, and therefore is described briefly. For related parts, references can be made to the corresponding description of the method embodiment provided above. The apparatus embodiment described below is merely an example.

This embodiment provides a data processing apparatus, run on a service platform of a vehicle service, and including: a request obtaining module 502, configured to obtain a data updating request uploaded by a detection component of an application after the detection component detects that a data updating condition of an interface element of the vehicle service is triggered, where the interface element is configured in a user interface of a terminal device on which the application runs; a vehicle query module 504, configured to query, based on a user identifier that is of a login user of the application and that is carried in the data updating request, a user vehicle associated with the vehicle service; an information query module 506, configured to: determine a target vehicle platform corresponding to the user vehicle in a plurality of vehicle platforms, and send an information query request of the user vehicle to the target vehicle platform; and an information receiving module 508, configured to: receive vehicle use information that is of the user vehicle and that is returned by the target vehicle platform, and deliver the vehicle use information to the detection component, so that the detection component performs, based on the vehicle use information, data updating on the interface element displayed in the user interface.

An embodiment of a data processing device provided in this specification is as follows: Corresponding to the above-described data processing method applied to a detection component of an application, based on the same technical concept, one or more embodiments of this specification further provide a data processing device. The data processing device is configured to perform the data processing method. FIG. 6 is a schematic structural diagram of a data processing device according to one or more embodiments of this specification.

The data processing device provided in this embodiment includes: As shown in FIG. 6, the data processing device can differ greatly due to different configurations or performance, and can include one or more processors 601 and a storage 602. The storage 602 can store one or more storage applications or data. The storage 602 can be a transitory storage or persistent storage. The application stored in the storage 602 can include one or more modules (not shown in the figure), and each module can include a series of computer-executable instructions in the data processing device. Still further, the processor 601 can be configured to communicate with the storage 602, to execute a series of computer-executable instructions in the storage 602 on the data processing device. The data processing device can further include one or more power supplies 603, one or more wired or wireless network interfaces 604, one or more input//output interfaces 605, one or more keyboards 606, etc.

In a specific embodiment, the data processing device includes a storage and one or more programs. The one or more programs are stored in the storage. The one or more programs can include one or more modules. Each module can include a series of computer-executable instructions in the data processing device. The one or more processors are configured to execute the one or more programs, including performing the following computer-executable instructions: detecting an interface element of a vehicle service of the application, where the interface element is configured in a user interface of a terminal device on which the application runs; uploading a data updating request to a service platform of the vehicle service if it is detected that a data updating condition of the interface element is triggered; receiving vehicle use information that is of a user vehicle associated with the vehicle service and that is delivered by the service platform, where the vehicle use information is obtained by the service platform by querying a target vehicle platform corresponding to the user vehicle in a plurality of vehicle platforms; and performing, based on the vehicle use information, data updating on the interface element displayed in the user interface.

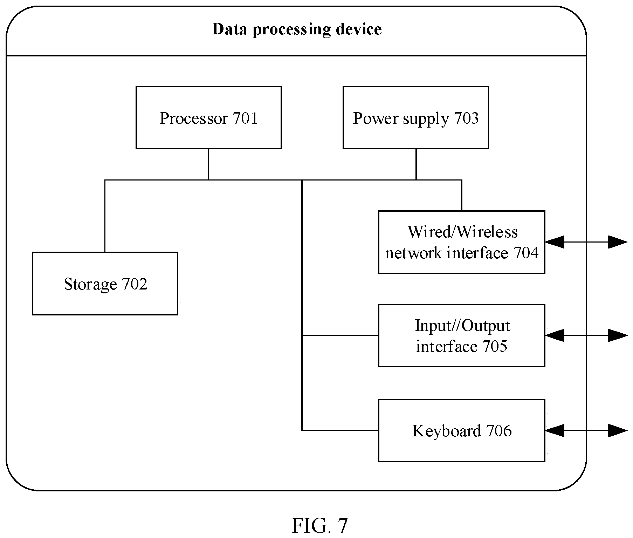

An embodiment of a data processing device provided in this specification is as follows: Corresponding to the above-described data processing method applied to a service platform of a vehicle service, based on the same technical concept, one or more embodiments of this specification further provide a data processing device. The data processing device is configured to perform the data processing method. FIG. 7 is a schematic structural diagram of a data processing device according to one or more embodiments of this specification.

The data processing device provided in this embodiment includes: As shown in FIG. 7, the data processing device can differ greatly due to different configurations or performance, and can include one or more processors 701 and a storage 702. The storage 702 can store one or more storage applications or data. The storage 702 can be a transitory storage or persistent storage. The application stored in the storage 702 can include one or more modules (not shown in the figure), and each module can include a series of computer-executable instructions in the data processing device. Still further, the processor 701 can be configured to communicate with the storage 702 to execute a series of computer-executable instructions in the storage 702 on the data processing device. The data processing device can further include one or more power supplies 703, one or more wired or wireless network interfaces 704, one or more input//output interfaces 705, one or more keyboards 706, etc.

In a specific embodiment, the data processing device includes a storage and one or more programs. The one or more programs are stored in the storage. The one or more programs can include one or more modules. Each module can include a series of computer-executable instructions in the data processing device. The one or more processors are configured to execute the one or more programs, including performing the following computer-executable instructions: obtaining a data updating request uploaded by a detection component of an application after the detection component detects that a data updating condition of an interface element of the vehicle service is triggered, where the interface element is configured in a user interface of a terminal device on which the application runs; querying, based on a user identifier that is of a login user of the application and that is carried in the data updating request, a user vehicle associated with the vehicle service; determining a target vehicle platform corresponding to the user vehicle in a plurality of vehicle platforms, and sending an information query request of the user vehicle to the target vehicle platform; and receiving vehicle use information that is of the user vehicle and that is returned by the target vehicle platform, and delivering the vehicle use information to the detection component, so that the detection component performs, based on the vehicle use information, data updating on the interface element displayed in the user interface.

An embodiment of a storage medium provided in this specification is as follows: Corresponding to the above-described data processing method applied to a detection component of an application, based on the same technical concept, one or more embodiments of this specification further provide a storage medium.

The storage medium provided in this embodiment is configured to store computer-executable instructions, and when the computer-executable instructions are executed by a processor, the following procedure is implemented: detecting an interface element of a vehicle service of the application, where the interface element is configured in a user interface of a terminal device on which the application runs; uploading a data updating request to a service platform of the vehicle service if it is detected that a data updating condition of the interface element is triggered; receiving vehicle use information that is of a user vehicle associated with the vehicle service and that is delivered by the service platform, where the vehicle use information is obtained by the service platform by querying a target vehicle platform corresponding to the user vehicle in a plurality of vehicle platforms; and performing, based on the vehicle use information, data updating on the interface element displayed in the user interface.

It is worthwhile to note that the embodiment of the storage medium in this specification and the embodiment of the data processing method in this specification are based on the same inventive concept. Therefore, for specific implementation of the embodiment, references can be made to the above-mentioned implementation of the corresponding method, and repeated parts are omitted for simplicity.

An embodiment of a storage medium provided in this specification is as follows: Corresponding to the above-described data processing method applied to a service platform of a vehicle service, based on the same technical concept, one or more embodiments of this specification further provide a storage medium.

The storage medium provided in this embodiment is configured to store computer-executable instructions, and when the computer-executable instructions are executed by a processor, the following procedure is implemented: obtaining a data updating request uploaded by a detection component of an application after the detection component detects that a data updating condition of an interface element of the vehicle service is triggered, where the interface element is configured in a user interface of a terminal device on which the application runs; querying, based on a user identifier that is of a login user of the application and that is carried in the data updating request, a user vehicle associated with the vehicle service; determining a target vehicle platform corresponding to the user vehicle in a plurality of vehicle platforms, and sending an information query request of the user vehicle to the target vehicle platform; and receiving vehicle use information that is of the user vehicle and that is returned by the target vehicle platform, and delivering the vehicle use information to the detection component, so that the detection component performs, based on the vehicle use information, data updating on the interface element displayed in the user interface.

It is worthwhile to note that the embodiment of the storage medium in this specification and the embodiment of the data processing method in this specification are based on the same inventive concept. Therefore, for specific implementation of the embodiment, references can be made to the above-mentioned implementation of the corresponding method, and repeated parts are omitted for simplicity.

Some specific embodiments of this specification are described above. Other embodiments fall within the scope of the appended claims. In some cases, the actions or steps described in the claims can be performed in a sequence different from that in the embodiments and desired results can still be achieved. In addition, the process depicted in the accompanying drawings does not necessarily need a particular sequence to achieve the desired results. In some implementations, multi-tasking and parallel processing are feasible or may be advantageous.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. Almost all designers program an improved method procedure into a hardware circuit, to obtain a corresponding hardware circuit structure. Therefore, a method procedure can be improved by using a hardware entity module. For example, a programmable logic device (PLD) (for example, a field programmable gate array (FPGA)) is such an integrated circuit, and a logical function of the programmable logic device is determined by a user through device programming. The designer independently performs programming to "integrate" a digital system to a PLD without requesting a chip manufacturer to design and manufacture an application-specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-highspeed integrated circuit hardware description language (VHDL) and Verilog are most commonly used. It should also be clear to a person skilled in the art that a hardware circuit for implementing a logical method procedure can be easily obtained by performing slight logic programming on the method procedure by using the above-mentioned several hardware description languages and programming the method procedure into an integrated circuit.

A controller can be implemented by using any appropriate method. For example, the controller can be a microprocessor or a processor, or a computer readable medium that stores computer-readable program code (such as software or firmware) that can be executed by the microprocessor or the processor, a logic gate, a switch, an application-specific integrated circuit (ASIC), a programmable logic controller, or a built-in microprocessor. Examples of the controller include but are not limited to the following microprocessors: ARC 625D, Atmel AT91SAM, Microchip PIC18F26K20, and Silicone Labs C8051F320. A storage controller can also be implemented as a part of the control logic of the storage. A person skilled in the art also knows that in addition to implementing the controller by using only the computer-readable program code, logic programming can be performed on method steps to enable the controller to implement the same function in a form of a logic gate, a switch, an application specific integrated circuit, a programmable logic controller, or an embedded microcontroller. Therefore, the controller can be considered as a hardware component, and an apparatus configured to implement various functions in the controller can also be considered as a structure in the hardware component. Alternatively, an apparatus configured to implement various functions can even be considered as both a software module implementing the method and a structure in the hardware component.

The systems, apparatuses, modules, or units described in the above-mentioned embodiments can be specifically implemented by a computer chip or an entity, or can be implemented by a product having a certain function. A typical implementation device is a computer. Specifically, the computer can be, for example, a personal computer, a laptop computer, a cellular phone, a camera phone, a smartphone, a personal digital assistant, a media player, a navigation device, an email device, a game console, a tablet computer, a wearable device, or a combination of any of these devices.

For ease of description, the above-mentioned apparatus is described by dividing functions into various units. Certainly, when the embodiments of this specification are implemented, functions of the units can be implemented in one or more pieces of software and/or hardware.

A person skilled in the art should understand that one or more embodiments of this specification can be provided as a method, a system, or a computer program product. Therefore, one or more embodiments of this specification can use a form of hardware only embodiments, software only embodiments, or embodiments with a combination of software and hardware. In addition, a form of a computer program product that is implemented on one or more computer-usable storage media (including but not limited to a disk storage, a CD-ROM, an optical storage, etc.) that include computer-usable program code can be used in this specification.

This specification is described with reference to the flowcharts and/or block diagrams of the method, the device (system), and the computer program product according to the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more processes in the flowcharts and/or in one or more blocks in the block diagrams.

Alternatively, these computer program instructions can be stored in a computer-readable storage that can instruct a computer or another programmable data processing device to work in a specific manner, so the instructions stored in the computer-readable storage generate an artifact that includes an instruction apparatus. The instruction apparatus implements a specific function in one or more procedures in the flowcharts and/or in one or more blocks in the block diagrams.

These computer program instructions may also be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts/or in one or more blocks in the block diagrams.

In a typical configuration, a computing device includes one or more processors (CPU), an input/output interface, a network interface, and a memory.

The memory may include a non-persistent memory, a random access memory (RAM), a non-volatile memory, and/or another form in a computer-readable medium, for example, a read-only memory (ROM) or a flash memory (flash RAM). The memory is an example of the computer-readable medium.

The computer-readable medium includes persistent, non-persistent, movable, and unmovable media that can store information by using any method or technology. The information can be computer-readable instructions, a data structure, a program module, or other data. Examples of the computer storage medium include but are not limited to a phase change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage, another magnetic storage device, or any other non-transmission medium. The computer storage medium can be used to store information accessible by a computing device. Based on the definition in this specification, the computer readable medium does not include transitory media such as a modulated data signal and carrier.

It is worthwhile to further note that the terms "include", "include", or any other variant thereof are intended to cover a non-exclusive inclusion, so that a process, a method, a product, or a device that includes a list of elements not only includes those elements but also includes other elements which are not expressly listed, or further includes elements inherent to such process, method, product, or device. Without more constraints, an element preceded by "includes a ..." does not preclude the existence of additional identical elements in the process, method, product, or device that includes the element.

One or more embodiments of this specification can be described in the general context of computer-executable instructions executed by a computer, for example, a program module. Usually, the program module includes a routine, a program, an object, a component, a data structure, etc. executing a specific task or implementing a specific abstract data type. The one or more embodiments of this specification can also be practiced in distributed computing environments. In the distributed computing environments, tasks are performed by remote processing devices that are connected through a communication network. In the distributed computing environments, the program module can be located in both local and remote computer storage media including storage devices.

The embodiments in this specification are described in a progressive manner. For the same or similar parts of the embodiments, references can be made to the embodiments. Each embodiment focuses on a difference from other embodiments. Particularly, the system embodiments are basically similar to the method embodiments, and therefore are described briefly. For related parts, references can be made to some descriptions in the method embodiments.

The above-mentioned descriptions are merely embodiments of this specification, and are not intended to limit this specification. A person skilled in the art can make various changes and variations to this specification. Any modification, equivalent replacement, or improvement made without departing from the spirit and principle of this specification shall fall within the scope of the claims in this specification.

## Claims

1. A data processing method, applied to a detection component of an application, and comprising:
detecting an interface element of a vehicle service of the application, wherein the interface element is configured in a user interface of a terminal device on which the application runs;
uploading a data updating request to a service platform of the vehicle service if it is detected that a data updating condition of the interface element is triggered;
receiving vehicle use information that is of a user vehicle associated with the vehicle service and that is delivered by the service platform, wherein the vehicle use information is obtained by the service platform by querying a target vehicle platform corresponding to the user vehicle in a plurality of vehicle platforms; and
performing, based on the vehicle use information, data updating on the interface element displayed in the user interface.

2. The data processing method according to claim 1, wherein the vehicle service is activated in the following manner:
verifying, based on vehicle identification information that is of the user vehicle and that is entered by a login user, whether the user vehicle satisfies a configuration condition for the interface element;
displaying an activation control of the interface element to the login user if the user vehicle satisfies the configuration condition for the interface element; and
activating the interface element for the login user if it is detected that the activation control is triggered.

3. The data processing method according to claim 2, wherein activating the interface element for the login user comprises:
reading user information of the login user and the vehicle identification information based on an information read request that is sent by the target vehicle platform after the target vehicle platform detects an information authorization instruction submitted by a vehicle providing service for the login user;
synchronizing the user information and the vehicle identification information to the target vehicle platform, wherein the target vehicle platform performs user vehicle verification based on the user information and the vehicle identification information; and
receiving an activation result that is of the interface element and that is returned by the target vehicle platform when verification succeeds, and displaying the activation result by using the vehicle service.

4. The data processing method according to claim 3, wherein before the operation of reading user information of the login user and the vehicle identification information based on an information read request that is sent by the target vehicle platform after the target vehicle platform detects an information authorization instruction submitted by a vehicle providing service for the login user is performed, the method further comprises:
loading a service page of the vehicle providing service, wherein if the target vehicle platform detects the information authorization instruction submitted by the service providing service, the target vehicle platform generates, based on the information authorization instruction, an information read request that carries a user identifier of the login user, and sends the information read request to the service platform;
wherein the information authorization instruction is submitted by the vehicle providing service after the vehicle providing service detects that an information authorization control configured on the service page is triggered.

5. The data processing method according to claim 3, wherein the manner of the user vehicle verification comprises:
querying, based on the vehicle identification information, vehicle user information having an association relationship with the vehicle identification information;
verifying whether the vehicle user information matches the user information; and
if the vehicle user information matches the user information, determining that a verification result of the user vehicle verification is that verification succeeds.

6. The data processing method according to claim 1, further comprising:
receiving vehicle abnormality information delivered by the service platform, wherein the vehicle abnormality information is sent to the service platform after the target vehicle platform detects an abnormal state of the user vehicle; and
performing, based on the vehicle abnormality information, data reminding on the interface element displayed in the user interface.

7. The data processing method according to claim 1, wherein that the data updating condition is triggered is detected in the following manner:
detecting whether a configuration request for the interface element exists, and if the configuration request for the interface element exists, determining that the data updating condition is triggered; or
detecting whether an updating request for the interface element exists, and if the updating request for the interface element exists, determining that the data updating condition is triggered; or
detecting whether a data updating time of the interface element arrives, and if the data updating time of the interface element arrives, determining that the data updating condition is triggered.

8. The data processing method according to claim 1, wherein the service platform obtains the vehicle use information in the following manner:
querying, based on a user identifier that is of a login user of the application and that is carried in the data updating request, the user vehicle associated with the vehicle service;
determining the target vehicle platform corresponding to the user vehicle in the plurality of vehicle platforms, and generating an information query request based on a vehicle service identifier of the user vehicle, wherein the vehicle service identifier is generated after the target vehicle platform activates the interface element; and
querying the vehicle use information from the target vehicle platform based on the information query request.

9. The data processing method according to claim 1, further comprising:
uploading a data switching request to the service platform if a switching instruction of the login user for the vehicle use information that is of the user vehicle and that is displayed on the interface element is detected;
receiving second vehicle use information that is of a second user vehicle associated with the vehicle service and that is delivered by the service platform based on the data switching request, wherein the vehicle use information is obtained by the service platform by querying a second vehicle platform corresponding to the second user vehicle in the plurality of vehicle platforms; and
performing, based on the second vehicle use information, data switching on the interface element displayed in the user interface.

10. The data processing method according to claim 1, further comprising:
uploading the data updating request to the service platform if it is detected that a data updating time of the interface element arrives, wherein the service platform queries, based on the data updating request, first vehicle use information and second vehicle use information of the user vehicle and the second user vehicle for which the interface element is activated;
receiving the first vehicle use information of the user vehicle and the second vehicle use information of the second user vehicle that are delivered by the service platform;
displaying the first vehicle use information on the interface element; and
displaying the second vehicle use information on the interface element if a switching instruction for the interface element is detected.

11. The data processing method according to claim 1, further comprising:
obtaining a vehicle service request submitted by a login user by using the interface element; and
uploading the vehicle service request to the service platform, to perform vehicle service processing of the user vehicle on the service platform.

12. A data processing method, applied to a service platform of a vehicle service, and comprising:
obtaining a data updating request uploaded by a detection component of an application after the detection component detects that a data updating condition of an interface element of the vehicle service is triggered, wherein the interface element is configured in a user interface of a terminal device on which the application runs;
querying, based on a user identifier that is of a login user of the application and that is carried in the data updating request, a user vehicle associated with the vehicle service;
determining a target vehicle platform corresponding to the user vehicle in a plurality of vehicle platforms, and sending an information query request of the user vehicle to the target vehicle platform; and
receiving vehicle use information that is of the user vehicle and that is returned by the target vehicle platform, and delivering the vehicle use information to the detection component, wherein the detection component performs, based on the vehicle use information, data updating on the interface element displayed in the user interface.

13. The data processing method according to claim 12, wherein the information query request is generated in the following manner:
generating the information query request of the user vehicle based on a vehicle service identifier that is comprised in an activation result of the interface element and that is returned by the target vehicle platform.

14. The data processing method according to claim 12, further comprising:
reading user information and vehicle identification information of the login user based on an information read request sent by the target vehicle platform, wherein the target vehicle platform sends the information read request after detecting an information authorization instruction submitted by a vehicle providing service for the login user;
synchronizing the user information and the vehicle identification information to the target vehicle platform, wherein the target vehicle platform performs user vehicle verification based on the user information and the vehicle identification information; and
receiving an activation result that is of the interface element and that is returned by the target vehicle platform when verification succeeds, and displaying the activation result by using the vehicle service.

15. The data processing method according to claim 12, further comprising:
receiving vehicle abnormality information that is sent by the target vehicle platform after the target vehicle platform detects an abnormal state of the user vehicle; and
delivering the vehicle abnormality information to the interface element, wherein the interface element performs, based on the vehicle abnormality information, data reminding on the interface element displayed in the user interface.

16. The data processing method according to claim 12, further comprising:
querying, based on a data switching request that is displayed on the interface element for the vehicle use information of the user vehicle and that is uploaded by the detection component, a second user vehicle that is associated with the vehicle service and for which the interface element is activated;
determining a second vehicle platform corresponding to the second user vehicle in the plurality of vehicle platforms, and querying second vehicle use information of the second user vehicle from the second vehicle platform; and
receiving the second vehicle use information returned by the second vehicle platform, and delivering the second vehicle use information to the detection component, wherein the detection component performs data switching on the interface element based on the second vehicle use information.

17. A data processing apparatus, run in a detection component of an application, comprising:
a detection module, configured to detect an interface element of a vehicle service of the application, wherein the interface element is configured in a user interface of a terminal device on which the application runs;
a request uploading module, configured to run if it is detected that a data updating condition of the interface element is triggered, wherein the request uploading module is configured to upload a data updating request to a service platform of the vehicle service;
an information receiving module, configured to receive vehicle use information that is of a user vehicle associated with the vehicle service and that is delivered by the service platform, wherein the vehicle use information is obtained by the service platform by querying a target vehicle platform corresponding to the user vehicle in a plurality of vehicle platforms; and
a data updating module, configured to perform, based on the vehicle use information, data updating on the interface element displayed in the user interface.

18. A data processing apparatus, run on a service platform of a vehicle service, and comprising:
a request obtaining module, configured to obtain a data updating request uploaded by a detection component of an application after the detection component detects that a data updating condition of an interface element of the vehicle service is triggered, wherein the interface element is configured in a user interface of a terminal device on which the application runs;
a vehicle query module, configured to query, based on a user identifier that is of a login user of the application and that is carried in the data updating request, a user vehicle associated with the vehicle service;
an information query module, configured to: determine a target vehicle platform corresponding to the user vehicle in a plurality of vehicle platforms, and send an information query request of the user vehicle to the target vehicle platform; and
an information receiving module, configured to: receive vehicle use information that is of the user vehicle and that is returned by the target vehicle platform, and deliver the vehicle use information to the detection component, wherein the detection component performs, based on the vehicle use information, data updating on the interface element displayed in the user interface.

19. A data processing device, comprising:
a processor; and
a storage, configured to store computer-executable instructions, wherein when the computer-executable instructions are executed, the processor is enabled to:
detect an interface element of a vehicle service of an application, wherein the interface element is configured in a user interface of a terminal device on which the application runs;
upload a data updating request to a service platform of the vehicle service if it is detected that a data updating condition of the interface element is triggered;
receive vehicle use information that is of a user vehicle associated with the vehicle service and that is delivered by the service platform, wherein the vehicle use information is obtained by the service platform by querying a target vehicle platform corresponding to the user vehicle in a plurality of vehicle platforms; and
perform, based on the vehicle use information, data updating on the interface element displayed in the user interface.

20. A data processing device, comprising:
a processor; and
a storage, configured to store computer-executable instructions, wherein when the computer-executable instructions are executed, the processor is enabled to:
obtain a data updating request uploaded by a detection component of an application after the detection component detects that a data updating condition of an interface element of a vehicle service is triggered, wherein the interface element is configured in a user interface of a terminal device on which the application runs;
query, based on a user identifier that is of a login user of the application and that is carried in the data updating request, a user vehicle associated with the vehicle service;
determine a target vehicle platform corresponding to the user vehicle in a plurality of vehicle platforms, and send an information query request of the user vehicle to the target vehicle platform; and
receive vehicle use information that is of the user vehicle and that is returned by the target vehicle platform, and deliver the vehicle use information to the detection component, wherein the detection component performs, based on the vehicle use information, data updating on the interface element displayed in the user interface.

21. A storage medium, configured to store computer-executable instructions, wherein when the computer-executable instructions are executed by a processor, the following procedure is implemented:
detecting an interface element of a vehicle service of an application, wherein the interface element is configured in a user interface of a terminal device on which the application runs;
uploading a data updating request to a service platform of the vehicle service if it is detected that a data updating condition of the interface element is triggered;
receiving vehicle use information that is of a user vehicle associated with the vehicle service and that is delivered by the service platform, wherein the vehicle use information is obtained by the service platform by querying a target vehicle platform corresponding to the user vehicle in a plurality of vehicle platforms; and
performing, based on the vehicle use information, data updating on the interface element displayed in the user interface.

22. A storage medium, configured to store computer-executable instructions, wherein when the computer-executable instructions are executed by a processor, the following procedure is implemented:
obtaining a data updating request uploaded by a detection component of an application after the detection component detects that a data updating condition of an interface element of a vehicle service is triggered, wherein the interface element is configured in a user interface of a terminal device on which the application runs;
querying, based on a user identifier that is of a login user of the application and that is carried in the data updating request, a user vehicle associated with the vehicle service;
determining a target vehicle platform corresponding to the user vehicle in a plurality of vehicle platforms, and sending an information query request of the user vehicle to the target vehicle platform; and
receiving vehicle use information that is of the user vehicle and that is returned by the target vehicle platform, and delivering the vehicle use information to the detection component, wherein the detection component performs, based on the vehicle use information, data updating on the interface element displayed in the user interface.
